# EUROPEAN PATENT APPLICATION

(11) **EP 0 920 794 A2**
(43) Date of publication of application: **09.06.1999**
(21) Application number: 98203577.6
(22) Date of filing: 23.10.1998
(51) Int. Cl.: A01C 5/06

(54) **An agricultural machine**

(30) Priority: 28.10.1997 NL 1007375
(71) Applicant: MAASLAND N.V., 3155 PD Maasland (NL)
(72) Inventor: van der Lely, Alexander, 3065 NA Rotterdam (NL); Bom, Cornelis Johannes Gerardus, 3181 VC Rozenburg (NL); Brabander, Adrianus Petrus Maria, 2672 DK Naaldwijk (NL)
(74) Representative: Corten, Maurice Jean F.M.

(57) **Abstract**

The invention relates to an agricultural machine, in particular an agricultural machine provided with one or more rotating coulters, e.g. a sowing machine, at least one of the coulters comprising two discs that are provided at their outer edges with protrusions and recesses, while the discs do not change their angular position relative to each other during rotation, and at least along part of the circumference the protrusions (42) of one disc engage with the recesses (43) of the other disc.

## Description

The invention relates to an agricultural machine, in particular an agricultural machine provided with one or more rotating coulters, e.g. a sowing machine, at least one of the coulters comprising two discs that are provided at their outer edges with protrusions and recesses.

Such a machine is known from the Russian patent 858 609. In this publication there is described a coulter for making wavy furrows, for which purpose the discs of the coulter make a swinging movement.

It is also known to provide coulters with non-swinging discs. The discs of these coulters have a smooth outer edge and sometimes an edge with recesses. The disadvantage of these coulters, which make indeed a straight furrow, is that they may slip under certain conditions.

The invention aims at providing an agricultural machine provided with one or more coulters that make a straight furrow and whose discs hardly slip, if at all.

In accordance with the invention, the discs do not change their angular position relative to each other during rotation, while at least along part of the circumference the protrusions of one disc engage with the recesses of the other disc.

In order to prevent as much as possible soil from accumulating near the edge of the discs, according to a further inventive feature, at least along a part of the circumference along which the protrusions of one disc engage with the recesses of the other disc, seen in side view, the shape of a protrusion corresponds to the shape of a recess of the other disc with which it engages.

In connection herewith it is particularly advantageous when, according to a further inventive feature, seen in side view, the protrusions and the recesses have an at least predominantly rectangular shape.

In accordance with a further inventive feature, in one or more of the positions in which the protrusions and the recesses engage with each other, the ends of the protrusions of one disc extend outwards beyond the outer surface of the other disc. As a result of this it is particularly achieved that the protrusions and recesses remove soil that has stuck thereto from each other's surface.

According to a further inventive feature, the discs are orientated perpendicularly to their respective axes of rotation. This arrangement prevents the discs from swinging.

The discs are fastened in a simple manner, if, according to a further inventive feature, there is provided on the inside of the disc a bearing house in which there is accommodated a bearing by means of which the disc rotates about a shaft end, said bearing house being fastened to the disc via at least one bolt-and-nut connection.

For the purpose of fastening the coulter to the agricultural machine, the machine is provided with a projecting tubular element to which the shaft ends for a couple of discs are fitted. This tubular element can be used for depositing material, such as seed, in the furrow.

As soil may stick to the inside of the discs, according to a further inventive feature, there is fitted a scraper device to the projecting element, which scraper device removes soil from the discs on the inside thereof.

The invention will be explained in further detail with reference to an exemplary embodiment.
Figure 1 is a side view of an agricultural machine according to the invention, said machine being provided with a row of coulters;
Figure 2 is, at an enlarged scale, a side view of a coulter;
Figure 3 is, at an enlarged scale, a cross-section of the coulter of Figure 2, taken on the line III - III, and
Figure 4 is, at an equal scale as Figure 3, a partial rear view of the coulter, taken on the line IV - IV.

The invention is by no means limited to the embodiments shown and described here; they only serve to illustrate the invention idea.

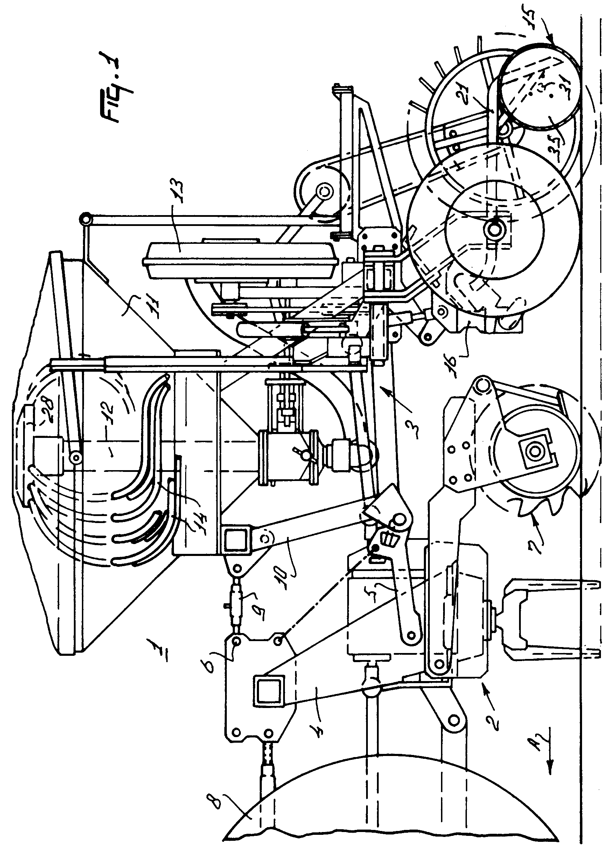

Figure 1 shows an agricultural machine 1 which is a combination of a rotary harrow 2 known per se and a sowing machine 3. The rotary harrow 2 comprises a coupling trestle 4 which is provided with coupling arms 5 known per se and with boreholes 6 that are provided at different levels at its upper side. The sowing machine 3 is located behind the rotary harrow 2 which is provided with a roller 7 and is coupled in a manner known per se to the three-point lifting hitch of a tractor 8. With the aid of a coupling trestle 10, this sowing machine 3 is connected to the rotary harrow 2 via a top rod 9 and the coupling arms 5.

The sowing machine is a pneumatic sowing machine known per se as described in Dutch patent application 9 500 335.

The sowing machine has a hopper 11 and a conducting tube 12 via which, by an airflow produced by a ventilator 13, seed is passed through lines 14 to a number of coulters 15 which are arranged in a row transversely to the direction of travel A.

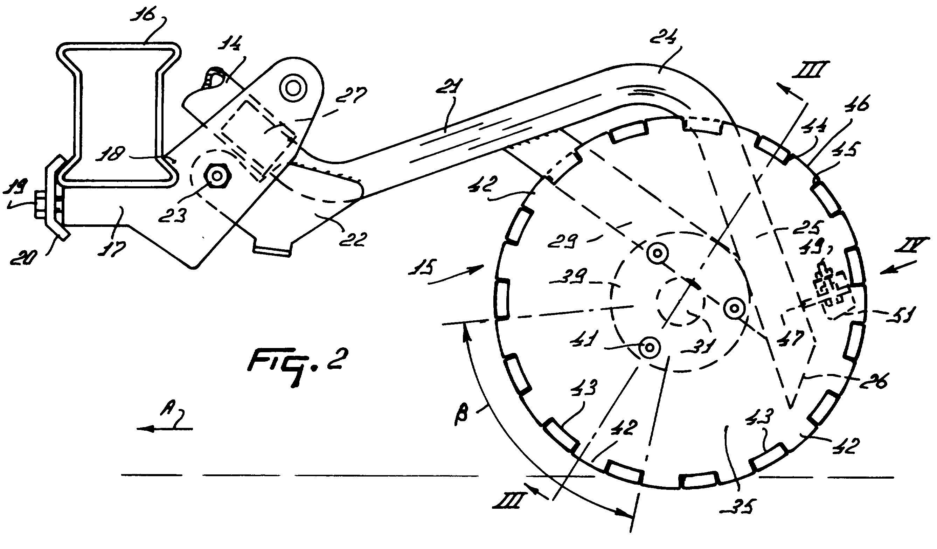

These coulters are shown at an enlarged scale in Figures 2, 3 and 4. At its rear side the sowing machine comprises a beam 16. This beam, which extends horizontally and transversely to the direction of travel A, can be adjusted in vertical height in a manner known per se. On this beam there are disposed a number of coulters 15 arranged in side-by-side relationship in such a manner that behind the machine, seen in the direction of travel, seed can be deposited in the soil in a number of furrows. A projecting element, hereinafter called a seed pipe 21, can be fitted to the beam 16, more in particularly to a bracket 17 which is fastened to the beam 16 by means of a projection 18, a bolt 19 and a clamping plate 20. For this purpose a fastening portion 22 is welded to the seed pipe 21, said fastening portion 22 being disposed on the bracket 17 by means of a bolt-and-nut connection 23. The seed pipe 21 comprises a bend 24 and a portion 25 that is orientated straight downwardly, the latter portion having an outlet opening 26. This outlet opening 26 is orientated rearwardly and obliquely to such an extent that, seen in the direction of travel A, it is located behind the front side of the seed pipe 21.

At its upper side 27 the seed pipe is provided with a connection for a flexible hose 14 which, in a manner known per se, extends to a distribution device 28 for the seed, said distribution device 28 being located at the upper side of the conducting tube 12 (Figure 1).

The seed pipe is provided with a strip 29 extending from the rearwardly extending portion and the downwardly extending portion 25 and being fastened to both portions. A carrier 30, extending transversely to the direction of travel A, is welded to the strip 29. Said carrier 30 has two shaft ends 31 and 32. The shaft ends 31 and 32 have centre lines 33, 34 respectively which, seen from above, enclose an angle α with each other. This angle, which amounts to 170° in this embodiment, is divided in two parts by a line in the direction of travel A, so that the shaft ends are arranged symmetrically. Optionally, the angle may also be chosen some degrees greater or smaller. In this embodiment the shaft ends are arranged horizontally, but a small deviation of some degrees so that, in rear view, the centre lines 33 and 34 constitute an angle which is closed in downward direction, is possible.

The coulter 15 comprises two discs 35 and 36. These discs are freely rotatable about the shaft ends 31, 32 respectively and are provided for the purpose with bearings 37, 38 respectively. Bearing houses 39, 40 respectively, in which the bearings are accommodated, are fitted to the discs by means of bolt-and-nut connections 41 of which only one is shown in the drawings.

The shaft ends 31 and 32 are perpendicular to the centre of the round discs 35 and 36, the arrangement being such that upon rotation of the discs the latter remain in the same plane. The discs 35 and 36 are concave, their concave sides facing each other. The curvature radius of these concave sides is preferably between 450 mm and 600 mm and amounts in this embodiment to 540 mm.

The outer edges of the discs comprise equally shaped protrusions 42 and equally shaped recesses 43 located therebetween. The protrusions and recesses of both discs are identical.

Seen in side view, the shape of the protrusions 42 and the recesses 43 is predominantly rectangular. The lateral sides 44 and 45 are orientated radially, which is also the case with the lateral sides of the recesses. Along part of the circumference of the disc, the protrusions of one disc and the recesses of the other disc fit together with some clearance, the arrangement being such that upon rotation of the discs consecutively other protrusions and recesses engage with each other.

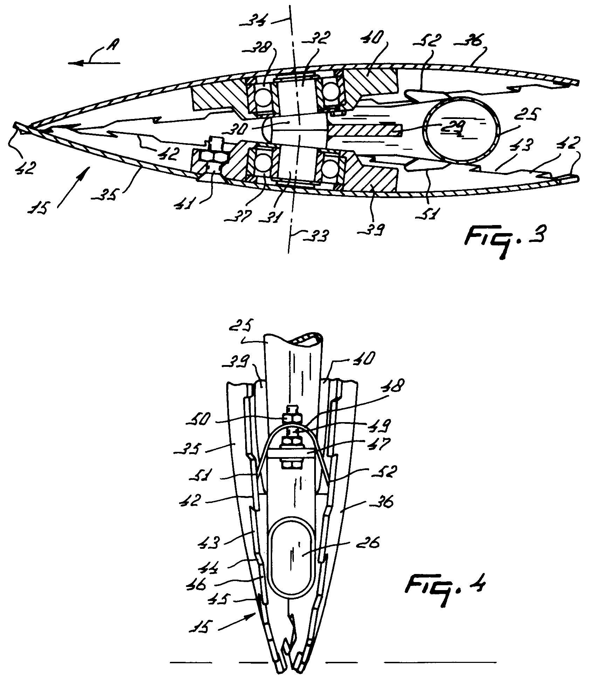

As shown in Figure 3, locally the protrusions of one disc extend outwards beyond the outside of the other disc and vice versa, so that properly closed recesses are obtained.

Viewed in radial direction, the lateral sides 44 and 45 of the protrusions 42 have preferably a length of approximately 1 cm. The combination of the specifically concave shape of the discs 35, 36 and the shape of the protrusions 42 and the recesses 43 contributes to a proper closing of the recesses thus preventing soil from sticking thereto.

The outer edges 46 of the protrusions 42 are located on a circle around the centre lines 33, 34 respectively. In this embodiment the number of protrusions and consequently the number of recesses of the discs preferably amounts to 15. However, this amount may be somewhat greater or smaller. In this embodiment the diameter of the discs is 30 cm.

Because of the inclined position of the centre lines 33 and 34 and the shape of the concave discs 35 and 36, the protrusions and recesses fit together through an angle β shown in Figure 2. This angle is orientated downwardly in the direction of travel and begins near the lower side of the discs. The angle β is preferably 60°, as shown in this embodiment, but a deviation of e.g. 10° is possible as well.

The coulters 15 can be adjusted at different depths. This takes place by a pivoting movement of the seed pipes 21 about the bolt 23. The machine comprises non-shown means to fix the coulters in the desired position. The pivoting movement of a seed pipe 21 changes the position of the sector β through which the protrusions and recesses engage with each other and are in contact with each other.

When the coulter works at a lower level, the position of this sector rotates clockwise in upward direction and vice versa when the coulters work at a lesser depth. This effect is caused by the position of the shaft ends 31 and 32.

To the rear side of the downwardly orientated portion 25 of the seed pipe 21 there is welded a projecting portion 47 to which a V-like strip 48 of resilient material, preferably of spring steel, is fastened (Figure 4). This V-like strip 48 serves as a scraper for the inner sides of the concave discs 35 and 36. Fastening of the strip 48 to the projecting portion 47 takes place by means of a bolt 49 fitted to the strip and a nut 50 disposed on the upper side of the strip.

The strip 48 scrapes with its lower sides serving as scraper faces 51 and 52 against the inner sides of the discs 35, 36 respectively. By adjusting the nut 50 the pressure of the scraper faces 51, 52 on the inner walls can be increased or decreased and also in case of wear of the resilient strip the scraper faces can be readjusted. As shown in Figure 2, the scraper faces 51, 52 are preferably located at the rear sides of the discs in such a manner that, upon upward rotation of the rear sides of the discs, the earth is scraped therefrom.

The coulter 15 operates as follows.

When the agricultural machine moves forwards, the rotary harrow 2 works the soil which is levelled by the roller 7, during which process also relatively large clods are crumbled. Then the sowing machine 3 deposits seed in the furrows made by the coulters 15. The coulters 15 ensure a suitably made furrow at the desired depth. The furrow should have an equally worked shape; moreover it is desirable that the furrow contains a minimum of loose clods. Furthermore a regular rotation of the discs of the coulter 15 is desired. Besides, because of the special shape of the protrusions 42 and the recesses 43, soil is prevented from remaining between the engaging recesses and protrusions and from impeding the rotating movement of the coulters. When the coulters do not rotate properly because of local accumulations of soil, there is a risk that the furrow is rather created by the trailing movement of the discs through the soil than by their rotating movement. This has an adverse effect on the equal shape of the furrow and the wall thereof. Moreover the shape of the protrusions is such that they are minimally subjected to wear, because their outer edges are located on the circumference of a circle. The number of protrusions of a disc also contributes thereto, the contact surface with the soil being large.

Because of the symmetric arrangement and the construction of the discs 35, 36, there is exerted no force or hardly any force on the coulter transversely to the direction of travel A. This makes it possible to fit the coulter to the seed pipe 21 instead of to a solid bar.

The shape of the seed pipe 21 that also serves as a carrier for the discs of the coulter, simplifies the construction. The V-like strip 48 with its scraper faces 51, 52 contributes to the inner side of the discs remaining clean, which is important for a proper rotation of the discs.

In the foregoing each time a sowing machine and seed coulters have been mentioned, but the construction according to the invention can also be used for coulters to be applied for other purposes, such as coulters for manure injectors. Also in this situation it is desirable to make proper furrows in which manure is deposited instead of seed. In the present embodiment the machine has one row of coulters. However, the machine may also comprise several rows of coulters.

The invention does not only relate to the agricultural machine but also to the coulters with seed pipes and to a method of applying coulters.

The invention is not limited to what has been described in the foregoing but also relates to all the details of the drawings. The invention further relates to all sorts of alternatives in the construction.

## Claims

1. An agricultural machine, in particular an agricultural machine provided with one or more rotating coulters, e.g. a sowing machine, at least one of the coulters comprising two discs that are provided at their outer edges with protrusions and recesses, characterized in that the discs do not change their angular position relative to each other during rotation, while at least along part of the circumference the protrusions (42) of one disc engage with the recesses (43) of the other disc.

2. An agricultural machine as claimed in claim 1, characterized in that, at least along that part of the circumference along which the protrusions (42) of one disc engage with the recesses (43) of the other disc, the shape of a protrusion, seen in side view, corresponds to the recess of the other disc with which it engages.

3. An agricultural machine as claimed in claim 1 or 2, characterized in that, seen in side view, the protrusions (42) and the recesses (43) have an at least predominantly rectangular shape.

4. An agricultural machine as claimed in any one of the preceding claims, characterized in that, seen in side view, the ends of the protrusions (42) are located at an outer edge (46) of a disc.

5. An agricultural machine as claimed in any one of the preceding claims, characterized in that the lateral sides (44, 45) of the protrusions (42) and the recesses (43) extend at least substantially radially relative to the axis of rotation of the relevant disc.

6. An agricultural machine, in particular as claimed in any one of the preceding claims, characterized in that, in one or more of the positions in which the protrusions (42) and the recesses (43) engage with each other, the ends of the protrusions of one disc extend outwards beyond the outer surface of the other disc.

7. An agricultural machine as claimed in any one of the preceding claims, characterized in that the number of protrusions and recesses of a disc amounts to more than 10, preferably to approximately 15.

8. An agricultural machine as claimed in any one of the preceding claims, characterized in that the protrusions and recesses of the two discs that form a couple engage with each other through an angle of approximately 80°, preferably of approximately 60°.

9. An agricultural machine as claimed in any one of the preceding claims, characterized in that the centre lines (33, 34) of the axes of rotation of the two discs that form a couple enclose an obtuse angle which amounts preferably to approximately 170°.

10. An agricultural machine, in particular as claimed in any one of the preceding claims, characterized in that the discs (35, 36) are orientated perpendicularly to their respective axes of rotation.

11. An agricultural machine, in particular as claimed in any one of the preceding claims, characterized in that on the inside of the disc (35, 36) there is provided a bearing house (39, 40) in which there is accommodated a bearing (37, 38) by means of which the disc rotates about a shaft end, said bearing house being fastened to the disc via at least one bolt-and-nut connection.

12. An agricultural machine as claimed in any one of the preceding claims, characterized in that the machine is provided with a projecting tubular element (21).

13. An agricultural machine as claimed in claim 12, characterized in that the projecting element (21) is designed as a seed pipe (21).

14. An agricultural machine as claimed in claim 12 or 13, characterized in that the seed pipe (21) comprises a straight downwardly orientated portion (25) to which the shaft ends (31, 32) for a couple of discs are fitted.

15. An agricultural machine, in particular as claimed in any one of the preceding claims 12 - 14, characterized in that there is fitted a scraper device to the projecting element (21), which scraper device removes soil from the discs on the inside thereof.

16. An agricultural machine as claimed in claim 15, characterized in that the scraper device is made of spring steel.

17. An agricultural machine as claimed in claim 14 or 15, characterized in that the scraper device consists of a predominantly V-like strip (48).

18. An agricultural machine as claimed in any one of the preceding claims, characterized in that the V-like strip (48) has downwardly extending legs enclosing an angle.

19. An agricultural machine as claimed in claim 18, characterized in that this angle amounts to at least approximately 30°.

20. An agricultural machine as claimed in any one of the preceding claims, characterized in that the scraper faces (51, 52) of the scraper device, seen in a side view of the disc, are orientated downwardly, preferably at least substantially radially, relative to the axis of rotation.

21. An agricultural machine as claimed in any one of claims 17 - 20, characterized in that there are provided means (49, 50) to modify the shape of the V-like strip (48) to some extent.

22. An agricultural machine as claimed in claim 21, characterized in that the means for modifying the shape of the V-like strip comprise a bolt and a screw by means of which the strip (48) is fitted to the projecting element.

23. An agricultural machine as claimed in any one of claims 17 - 22, characterized in that the V-like strip (48) has a thickness of approximately 1 mm.

24. An agricultural machine as claimed in any one of claims 12 - 23, characterized in that the projecting element (21) is coupled to the remaining part of the machine so as to be pivotable about a horizontal pivotal axis (23).

25. An agricultural machine as claimed in any one of the preceding claims, characterized in that, upon pivoting of the projecting element, the angle through which the recesses (43) and the protrusions (42) engage with each other rotates about the pivotal axis.

26. An agricultural machine as claimed in any one of the preceding claims, characterized in that two discs (35, 36) that form a couple are designed as concave ones, their concave sides facing each other.

27. An agricultural machine as claimed in claim 26, characterized in that the radius of the concave disc amounts to approximately 54 cm.

28. A coulter consisting of two discs with a seed pipe as claimed in any one of the preceding claims.

29. A method of applying the coulters as claimed in any one of the preceding claims, characterized in that the sector β through which the protrusions of one disc engage with the recesses of the other disc rotates clockwise when the coulters work at a lower level.
